# EUROPEAN PATENT APPLICATION

(11) **EP 1 925 656 A2**
(43) Date of publication of application: **28.05.2008**
(21) Application number: 07018215.9
(22) Date of filing: 17.09.2007
(51) Int. Cl.: C10M 141/00, C10M 157/00, C10M 161/00, F16C 33/00

(54) **Low friction sliding mechanism**

(30) Priority: 19.09.2006 JP 2006252043; 05.07.2007 JP 2007177100
(71) Applicant: Nissan Motor Co., Ltd., Kanagawa 221-0023 (JP)
(72) Inventor: Kamada, Seiji, Atsugi-shi, Kanagawa 243-8510 (JP); Ueno, Takafumi, Atsugi-shi, Kanagawa 243-8510 (JP); Hashimoto, Tomihito, Atsugi-shi, Kanagawa 243-8510 (JP)
(74) Representative: Schaeberle, Steffen

(57) **Abstract**

A low friction sliding mechanism employed in an internal combustion engine of an automotive vehicle. The low friction sliding mechanism includes first and second sliding members which are in slidable contact with each other. At least one of the first and second sliding members has a sliding surface portion whose at least a part is formed of a resinous material containing hydrophilic fine particle. Additionally, a lubricant exists between the first and second sliding members and includes a friction modifier containing at least one of organic oxygen-containing compound and aliphatic amine-based compound.

## Description

### BACKGROUND OF THE INVENTION

This invention relates to improvements in a low friction sliding mechanism, and more particularly to the low friction sliding mechanism which can reduce a frictional resistance at a sliding section of an internal combustion engine of an automotive vehicle or the like thereby improving a fuel saving performance.

Nowadays, an internal combustion engine is being strongly required to be increased in engine speed, to be increased in compression ratio and to be lightened in weight and to be improved in fuel consumption, as compared with in the past. This is assumed to be achieved by lowering friction at sliding sections of the engine.

As a measure to achieve lowering friction and improving abrasion resistance and anti-seizure characteristics at the sliding sections in the engine, hitherto it has been employed to coat a substrate with a lubricating coating which is prepared by blending solid lubricants such as molybdenum disulfide, graphite, polytetrafluoroethylene and the like in a binder such as polyamideimide, polyimide, epoxy resin or the like. More specifically, it has been proposed that the lubricating coating is formed of a sliding resinous composition including 50 to 73 wt% of a binder made of at least one of polyamideimide and polyimide, and 27 to 50 wt% of a solid lubricant containing 3 to 15 wt% of polytetrafluoroethylene, 20 to 30 wt% of molybdenum disulfide and 2 to 8 wt°/ of graphite, as disclosed in Japanese Patent No. 3017626.

Additionally, it has been proposed in Japanese Patent provisional Publication No. 2004-149622 to form a coating film layer made of a dry coating film lubricant including a coating film improver formed of at least one selected from polyamide resin, epoxy silane and epoxy resin and hard particle selected from silicon nitride and alumina, at at least a part of a surface (serving as a sliding surface) of a matrix of a sliding member. The at least a part of the matrix surface is formed with striations so as to have a surface roughness of 8 to 18 µmRz in so-called ten-point means roughness.

### SUMMARY OF THE INVENTION

However, with the above sliding resinous composition disclosed in Japanese Patent No. 3017626, a friction reduction at the sliding sections are accomplished mainly with addition of polytetrafluoroethylene. In this regard, polytetrafluoroethylene hampers a lipophilicity of the resinous composition, and therefore its added amount is limited from the viewpoint of ensuring a wettabiliy. As a result, there is a limit in friction lowering effect, encountering a difficulty of obtaining a further friction reduction effect.

With the above coating film layer made of the dry coating film lubricant disclosed in Japanese Patent provisional Publication No. 2004-149622, the abrasion resistance of the sliding member can be improved. However, the friction of the sliding member depends on the friction coefficient of a matrix resin of the coating film layer, and therefore it is required to add a solid lubricant such as polytetrafluoroethylene, molybdenum disulfide, graphite or the like to the coating film layer in order to accomplish a friction reduction. Thus, this technique is still insufficient from the viewpoint of the friction reduction.

It is, therefore, an object of the present invention to provide an improved low friction sliding mechanism which can effectively overcome drawbacks encountered in conventional low friction sliding mechanisms.

Another object of the present invention is to provide an improved low friction sliding mechanism in which a friction coefficient of a sliding member can be extremely lowered.

According to the present invention, a low friction sliding mechanism comprises first and second sliding members which are in slidable contact with each other. At least one of the first and second sliding members has a sliding surface portion whose at least a part is formed of a resinous material containing hydrophilic fine particle. Additionally, a lubricant exists between the first and second sliding members and includes a friction modifier containing at least one of organic oxygen-containing compound and aliphatic amine-based compound.

### BRIEF DESCRIPTION OF THE DRAWING

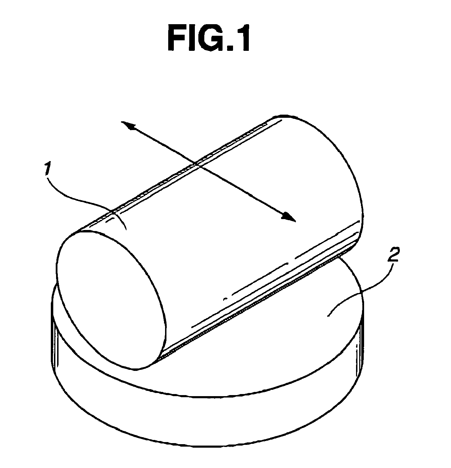

Fig. 1 is a schematic perspective view of an essential part of a cylinder-on-disc single member reciprocating friction tester used in a friction test for evaluating the performance of low friction sliding mechanisms according to the present invention.

### DETAILED DESCRIPTION OF THE INVENTION

Hereinafter, a low friction sliding mechanism according to the present invention will be discussed in detail. In the specification of the present application, "%" of concentration, content and added amount represents % by mass unless otherwise specified.

According to the present invention, a low friction sliding mechanism comprises first and second sliding members which are in slidable contact with each other. At least one of the first and second sliding members has a sliding surface portion whose at least a part is formed of a resinous material containing hydrophilic fine particle(s). The resinous material is in slidable contact with the surface of the opposite sliding member. Additionally, a lubricant exists between the first and second sliding members and includes a friction modifier containing at least one of organic oxygen-containing compound and aliphatic amine-based compound.

It will be understood that at least one of the first and second sliding members is provided with the above resinous material. The above sliding surface portion means a thin layer containing the surface of the sliding member and contactable with the opposite sliding member.

Thus, the resinous material in which the hydrophilic fine particles are dispersed is used in the sliding member(s), and the friction modifier containing organic oxygen-containing compound and/or aliphatic amine-based compound is used in combination with the resinous material(s). Accordingly, the hydrophilic fine particle adsorbs the friction modifier, thereby exhibiting an excellent lubrication characteristics particularly in a boundary lubrication region. This largely reduces the amount of carbon dioxide discharged from an engine, thereby providing an automotive vehicle excellent in fuel economy.

Here, the hydrophilic fine particle is a primary particle or an aggregate of the primary particle and has preferably an average particle size ranging from 1 to 100 nm, more preferably an average particle size ranging from 1 to 10 nm. This reduces attack against an opposite member or opposite sliding member, and enlarges the surface area of the hydrophilic fine particle thereby making it possible that the friction modifier tends to be more easily adsorbed on the hydrophilic fine particle so that an excellent lubrication characteristics can be obtained.

It is presently technically difficult to render the average particle size at a level of less than 1 nm, whereas a desired lubrication characteristics is difficult to be obtained if the average particle size exceeds 100 nm.

The content or added amount of the hydrophilic fine particle is preferable not more than 10 % based on the total mass of the resinous material, by which an abrasion resistance becomes excellent so that a friction reduction effect can be obtained in a wide load range. The content of the hydrophilic fine particle is more preferably not more than 1 %, most preferably not more than 0.1 %. By this, a friction reduction effect for reducing friction can be obtained without degrading the characteristics such as stiffness and adhesiveness, of the film of the resinous material. Thus, the content or added amount of the hydrophilic fine particle is reduced thereby lowering a cost.

The resinous material is preferably a coating film containing polyamide resin, polysulfone resin, polyetherimide resin, polyethersulfone resin, polyamideimide resin, polyimide resin, polyetherether ketone resin or epoxy resin, or any combination of the above-mentioned resins. By this, the hydrophilic fine particle is dispersed in the resinous coating film high in heat resistance, thereby reducing its friction due to heat generation under sliding, its lowering in abrasion resistance and its deterioration upon time lapse. Additionally, in case that the hydrophilic fine particle is diamond particle, a required amount of diamond particle is suppressed as compared with a technique where diamond particle is mixed in a resinous bulk material upon kneading, thereby making it possible to lower a cost.

The coating film has a film thickness preferably ranging from 1 to 50 µm, more preferably ranging from 1 to 20 µm. If the film thickness is less than 1 µm, continuance of the effect is degraded owing to abrasion of the coating film under sliding. If the film thickness exceeds 50 µm, it is difficult to obtain a dimensional accuracy of the sliding section of the sliding member and the adhesiveness of the coating film.

It will be understood that such a coating film can be formed, for example, by an air spray, a screen printing, or a dipping.

The content (or added amount) of the friction modifier contained in the lubricant is preferably within a range of from 0.01 to 5.0 % based on the total mass of the lubricant, more preferably within a range of from 0.05 to 2.5 %, most preferably within a range of from 0.5 to 2.5 %. By this, an excellent low friction characteristics can be obtained while the solubility and storage stability to a lubricant such as engine oil.

Increasing the content of the friction modifier effects an improvement in fuel economy; however, increasing the content over 5.0 % lowers the effect due to addition relative to a cost increase, and there arises the possibility of the friction modifier becoming difficult to be dissolved so as to precipitate. Thus, such an increased content of the friction modifier is not practical. Additionally, if the content is less than 0.01 %, the effect cannot be expected, so that the content is preferable not less than 0.01 %.

In case that the organic oxygen-containing compound is used as the friction modifier, the organic oxygen-containing compound preferably contains a compound having at least one hydroxyl group and/or at least one carboxyl group. By virtue of having such a functional group, the organic oxygen-containing compound is effectively adsorbed to the hydrophilic fine particle in the resinous material, so that an excellent friction characteristics can be obtained.

Further, the organic oxygen-containing compound preferably contains a compound having an ester linkage and/or an ether linkage so as to tend to be high in solubility to a lubricant such as engine oil or the like. Furthermore, the organic oxygen-containing compound preferably contains a compound having an oleyl group so as to tend to be high in solubility to a lubricant such as engine oil or the like.

The lubricant includes a base oil, a detergent and a friction modifier and may suitably further includes a variety of additives such as an anti-wear agent, an ashless dispersant, an antioxidant, a viscosity index improver, a pour point depressant, a rust inhibitor, an anti-foaming agent and the like similarly to a general lubricant.

Here, an embodiment of the low friction sliding mechanism according to the present invention will be discussed further in detail.

The low friction sliding mechanism is arranged such that a resinous sliding member A in which the hydrophilic fine particle is dispersed and a sliding member B containing no hydrophilic fine particle(s) are in slidable contact with each other. When sliding is made between the sliding members A, B, a low friction agent composition or lubricant exists between the sliding members A, B. The low friction agent composition contains the organic oxygen-containing compound C and the aliphatic amine-based compound D. In the low friction sliding mechanism, the sliding member A may be replaced with another sliding member in which a coating film of the resinous material or resin composition is formed at the surface of a substrate, i.e., at least a part of the sliding surface portion of the above another sliding member is formed of the resinous material or resin composition.

Examples of the hydrophilic fine particle used in the resinous sliding member A are diamond particle, silica particle, hydrophilic carbon black and the like. The diamond particle may be natural or artificial; however, it is preferable to use artificial diamond particle from the view points of obtaining fine particles having stable particle sizes and cost reduction. As the silica particle, pulverized silica particle may be used; however, it is preferable to use spheroidal silica fine particle which is obtained by causing the pulverized silica particle to be further subjected to a spheroidizing treatment in a high temperature flame, thereby reducing an attaching characteristics against an opposite member. The hydrophilic carbon black is arranged such that hydrophilic groups are added to the surface of carbon black, and is formed, for example, by a known method disclosed in Japanese Patent No. 3691947 in which carbon black is subjected to a wet oxidization using oxyhalogenide and acid or peroxide after undergoing an ozone oxidization.

Examples of synthesis method for the artificial diamond are a high-temperature/high-pressure process in which graphite is phase-transformed to a diamond structure at a high static pressure of 13 to 16 GPa and at a high temperature of 3000 to 4000 °C in a gastight container; a chemical vapor deposition (CVD) process in which diamond crystal is grown on a substrate at a pressure near the atmospheric pressure by using methane gas or the like as a raw material; and a detonation process in which graphite is phase-transformed to a diamond structure by applying dynamic impact to the graphite under detonation of an oxygen deficient explosive in an inert medium. The diamond by the detonation process has a structure in which nanv-order particles are agglomerated, and therefore is called a cluster diamond. This is preferably used because of providing stable fine particles of diamond and low in production cost.

The above sliding member A includes a matrix resin or plastic which is a thermoplastic resin or a thermosetting resin. Preferable examples of the matrix resin are polyamide resin, polysulfone resin, polyetherimide resin, polyethersulfone resin, polyamideimide resin, polyimide resin, polyetherether ketone resin and epoxy resin in case that the sliding member is used under severe conditions like an automotive engine part. Of these, polyamideimide resin is particularly preferably used as the matrix resin or contained in the matrix resin from the viewpoints of being high in heat resistance because of having a glass transition temperature of not lower than 250 °C, being high in strength of its coating film because of having cross-linking structure in a molecule, and being excellent in adhesiveness to the substrate.

The polyamideimide resin preferably has a number average molecular weight ranging from 1000 to 10000 in a state before becoming a coating film upon drying or calcining. The number average molecular weight is more preferably within a range of from 2000 to 8000, and most preferably within a range of from 4000 to 8000. If the number average molecular weight is less than 1000, entanglement of molecular chains is less, and therefore the abrasion resistance of the resinous material or resin composition may be lowered. If the number average molecular weight exceeds 10000, the coefficient of friction of polyamideimide resin as the matrix resin becomes too high, and therefore the coefficient of friction of the resinous material or resin composition will become too high. Additionally, the adhesiveness of the resin composition to the substrate is lowered so that peeling of the resin composition tends to occur.

The above hydrophilic fine particle may be used upon being kneaded with a molten plastic resin or plastic by using a biaxial extruder, or be used upon being dispersed in a coating material and formed as a coating film on a metal or a resin material. In this connection, PTFE (polytetrafluoroethylene), MoS₂ (molybdenum disulfide), graphite and the like may be suitably blended in addition to the diamond particle, which is further effective to friction and abrasion resistance characteristics. The blended ratios of these materials may be suitably selected according to employed bearing pressure, speed and lubricating condition.

The substrate (in a state before the forming the coating film) of the sliding member A is formed, for example, of a ferrous material such as a carburized steel, a quenched steel or the like, or a nonferrous metal such as a copper-based material, a zinc-based material, an aluminum-based material or the like. However, a metal material such as a magnesium-based material or a titanium-based material is not suitable for the substrate on which the coating film is formed, because it is low in adhesiveness of the coating film thereto.

In contrast, the constituting material of the above sliding member B is not particularly limited so as to be able to be the same as that of the sliding member A. More specifically, the sliding member B is formed of, for example, a metal material such as a ferrous material, a copper-based material, a zinc-based material, an aluminum-based material, a magnesium-based material, a titanium-based material and the like. Particularly the ferrous material, the aluminum-based material or the magnesium-based material may be suitably employed for a sliding section of existing machines and apparatuses and is effective for contributing to energy saving widely in a variety of fields. Additionally, a nonmetal material such as a resin or plastic, a ceramic and a carbon material or the like is used as the constituting material of the sliding member B.

The above ferrous material is not particularly limited and therefore may include not only a high purity iron but also a variety of ferrous alloys containing nickel, copper, zinc, chromium, cobalt, molybdenum, lead, silicon, titanium, and any combination of these elements. More specifically, examples of the ferrous material are carburized steel SCM420 and SCr420 according to Japanese Industrial Standard (JIS).

When the ferrous material is used, the ferrous material preferably has a surface hardness of 45 to 60 (HRC) in Rockwell hardness C-scale. This is effective for keeping a durability of the coating film even under a sliding condition at a high bearing pressure.

The above aluminum-based material is not particularly limited, so that not only a high purity aluminum but also a variety of aluminum-based alloy may be used. More specifically, it is preferable to use a hypo-eutectic aluminum alloy, a hyper-eutectic aluminum alloy or the like which alloy contains, for example, 4 to 20 % of silicon (Si), 1.0 to 5.0 % of copper (Cu). Preferable examples of the aluminum alloy are AC2A, AC8A, ADC12 and ADC14 according to JIS.

When the aluminum-based material is used, it is preferable that the aluminum-based alloy has a surface hardness ranging from 80 to 130 (HB) in Brinell hardness. If the surface hardness of the aluminum-based material is lower than 80 which is outside the above range, the aluminum-based material is liable to wear.

A variety of thin film coatings may be applied on the metal and nonmetal materials as the constituting material of the above sliding member B- More specifically, the thin film coating of titanium nitride (TiN), chromium nitride (CrN) or the like may be applied on the surface of the above ferrous material, aluminum-based material, magnesium-based material, titanium-based material or the like. In this case, the surface of this thin film coating has a surface hardness ranging from 1000 to 3500 (Hv) in micro-Vickers hardness at 10 g load and a film thickness ranging from 0.3 to 2.0 µm. If the surface hardness and the film thickness are respectively lower that 1000 (Hv) and not less than 0.3 µm which are outside the above ranges, abrasion is liable to occur. In contrast, if the surface hardness and the film thickness exceed respectively 3500 (Hv) and 2.0 µm, the thin film coating is liable to peel off.

As discussed above, the sliding surface of the resinous sliding member A, in which the hydrophilic fine particle is dispersed is in slidable contact with the sliding surface of the opposite sliding member B so as to form a sliding plane or section therebetween. The sliding plane is not limited to particular ones as far as the sliding plane is formed between the two sliding surfaces which are in slidable contact with each other, in which the low friction agent composition exists at the sliding plane or between the two sliding surfaces.

The sliding plane corresponds to, for example, a sliding section of an internal combustion engine of a four-stroke cycle, a two-stroke cycle or the like (for example, a valve operating system, a piston ring, a piston skirt, a connecting rod, a crankshaft, a bearing metal, a gear, a chain, a chain guide, a belt, an oil pump, a water pump and the like), and a variety of sliding planes which are required to be low in friction characteristics.

Additionally, the low friction sliding mechanism according to the present invention may be used, for example, for a bearing, a gear, a piston ring and a washer for tension-adjusting in a general machine, an artificial joint and the like. However, it will be understood that usage of the low friction sliding mechanism is not limited to the above.

The above organic oxygen-containing compound C is specifically a compound having, for example, hydroxyl group, carboxyl group, carbonyl group, a compound having ester linkage and/or ether linkage, or the like, in which the compound may have two or more kinds of the groups and/or the linkages. The organic oxygen-containing compound C preferably has hydroxyl group, carboxyl group, carbonyl group, ester linkage or ether linkage, or any combination of two or more of the groups and the linkages. The organic oxygen-containing compound C more preferably has hydroxyl group, carboxyl group or ester linkage, or any combination of the groups and the linkage.

Of these organic oxygen-containing compounds C, one having hydroxyl group is preferable from the viewpoint of obtaining a further improved friction reduction effect. Of many hydroxyl groups, alcoholic hydroxyl group is preferable as compared with hydroxyl group which is directly bonded to carbonyl group like in carboxyl group or the like, because it is higher in friction reduction effect- Additionally, although the number of such hydroxyl groups in a compound is not limited, it is preferable that the compound has hydroxyl groups as much as possible from the viewpoint of improving the friction reduction effect. However, the number of hydroxyl groups may be limited from the viewpoint of solubility in case that the organic oxygen-containing compound C is used with a medium such as a base oil of a lubricating oil or the like as discussed below.

The aliphatic amine-based compound D may have, for example, straight or branched aliphatic hydrocarbon group which has a carbon number ranging from 6 to 30, preferably a carbon number ranging from 8 to 24, most preferably a carbon number ranging from 10 to 20. If the carbon number is outside the range of from 6 to 30, the friction reduction effect may not be sufficiently obtained. It will be understood that the aliphatic amine-based compound D may have other hydrocarbon groups if it has the straight or branched aliphatic hydrocarbon group which has the carbon number within the above range.

The above organic oxygen-containing compound C or the above aliphatic amine-based compound D can exhibit an extremely excellent low friction characteristics when it is used singly (or in amount of 100 %) as the lubricant of the present invention, at the sliding plane or section formed between the resinous sliding member A in which the hydrophilic fine particles are dispersed and the sliding member B. The lubricant may be prepared by blending other component(s) with the above organic oxygen-containing compound C and/or the above aliphatic amine-based compound D, and be supplied to the corresponding sliding plane to be lubricated. Examples of such other component(s) are a medium such as a lubricating oil base oil, a variety of additives, and the like.

Specific examples of the above medium are mineral oil, synthetic oil, natural oil, diluted oil, grease, wax, hydrocarbon having a carbon number ranging from 3 to 40, hydrocarbon-based solvent, organic solvent other than hydrocarbon-based one, water and the like, and a mixture of these materials, which are in the state of liquid, grease or wax particularly under a sliding condition of the low friction sliding mechanism or at a normal temperature. It is preferable to use particularly the lubricating oil base oil as the medium. Such a lubricating oil base oil is not particularly limited, so that ones which are normally used as the base oil of lubricating oil composition can be used regardless of mineral oil-based base oil or synthetic base oil.

### EXAMPLES

The present invention will be more readily understood with reference to the following Examples in comparison with Comparative Examples and Reference Examples; however, these Examples are intended to illustrate the invention and are not to be construed to limit the scope of the invention.

### EXAMPLE 1

### <Preparation of Resinous Material Precursor 1>

Powdery diamond particles (having a primary particle size ranging from 4 to 5 nm) obtained by a detonation process was added into N-methyl-2-pyrrolidone (NMP) and then stirred in a bead mill for 30 minutes to form a mixture. Thereafter, polyamideimide resin (having a number average molecular weight of 6000) synthesized by an isocyanate process was added to the mixture so as to prepare a resinous material (resin composition) precursor 1 containing 1 % of the diamond particle based on the polyamideimide resin.

### <Production of Sliding member>

Defatting with alcohol was made on a disc (having a diameter of 24 mm, a thickness of 7.9 mm, and a surface roughness Ra of 0.1 µm) formed of a material A6061 (according to JIS) subjected to a so-called T6 treatment (a solution heat treatment plus an age hardening treatment) and serving as a substrate. Thereafter, the above-mentioned resinous material precursor 1 was spray-coated at the surface of the disc in such a manner that a coating film to be formed on the disc would have a film thickness of 20±5 µm. Then, the sprayed disc was heated at 180 °C for 60 minutes thereby forming the coating film on the disc thus obtaining a sliding member to be used in a low friction sliding mechanism of this Example. The above surface roughness Ra is according to JIS B 0601.

It is to be noted that the same sliding member as that in Example 1 was used in EXAMPLE 2, EXAMPLE 5 and COMPARATIVE EXAMPLE 2.

### EXAMPLE 3

The procedure of Example 1 was repeated with the exception that the resinous material precursor 1 was prepared to contain 0.1 % of diamond particle based on the polyamindeimide resin, thus obtaining a sliding member to be used in a low friction sliding mechanism of this Example.

### EXAMPLE 4

The procedure of Example 1 was repeated with the exception that the resinous material precursor 1 was prepared to contain 0.05 % of diamond particle based on the polyamindeimide resin, thus obtaining a sliding member to be used in a low friction sliding mechanism of this Example.

### EXAMPLE 6

The procedure of Example 1 was repeated with the exception that spheroidal silica particles (available from Denki Kagaku Kogyo Kabushiki Kaisha under the trade name of UFP-80) having an average particle size of 34 nm was used in place of the diamond particles in the resinous material precursor 1, and that the resinous material precursor 1 was prepared to contain 1 % of the spheroidal silica particles based on the polyamindeimide resin, thus obtaining a sliding member to be used in a low friction sliding mechanism of this Example.

### EXAMPLE 7

The procedure of Example 1 was repeated with the exception that hydrophilic carbon black (available from Tokai Carbon Co., Ltd. under the trade name of Tokablack # A700F) was used in place of the diamond particles in the resinous material precursor 1, and that the resinous material precursor 1 was prepared to contain 1 % of the hydraulic carbon black based on the polyamindeimide resin, thus obtaining a sliding member to be used in a low friction sliding mechanism of this Example.

### EXAMPLE 8

Powdery diamond (having an average primary particle size of 4 to 5 nm) prepared by a detonation process was added to polyamide 66 resin (available from Asahi Kasei Chemicals Corporation under the trade name of Leona 1402S), in an amount of 1 % based on the polyamide 66 so as to form a mixture. This mixture underwent melting and kneading in a biaxial kneading-extruder thereby producing pellets. Thereafter, the produced pellets were subjected to melting and extruding by using a single axis extruder and a T-shaped die, thus obtaining a sheet-shaped sample having a thickness of 1 mm.

It is to be noted that the same sliding member as that in Example 8 was used in Comparative Example 3.

### COMPARATIVE EXAMPLE 1

A polyamideimide resin (having a number average molecular weight of 6000) synthesized by an isocyanate process was diluted to a certain concentration with N-methyl-2-pyrrolidone (NMP) thereby obtaining a resinous material precursor 2. Then, the procedure of <Production of Sliding member> in Example 1 was repeated with the exception that the resinous material precursor 2 was used in place of the resinous material precursor 1, thereby obtaining a sliding member to be used in a low friction sliding mechanism of this Example.

### REFERENCE EXAMPLE 1

The procedure of Example 1 was repeated with the exception that the resinous material precursor 1 was prepared to contain 10 % of diamond particle based on the polyamindeimide resin, thus obtaining a sliding member to be used in a low friction sliding mechanism of this Example

### REFERENCE EXAMPLE 2

The procedure of Example 1 was repeated with the exception that the powdery diamond particles obtained by the detonation process was replaced with diamond particles (having an average primary particle size of 0.1 µm) obtained by a high-temperature/high-pressure process in the resinous material precursor 1, thus obtaining a sliding member to be used in a low friction sliding mechanism of this Example.

### EVALUATION TEST

In order to grasp the friction characteristics of the low friction sliding mechanisms of the present invention, a friction test (cylinder-on-dise single reciprocating test) was conducted on the low friction sliding mechanism using the sliding member of each of Examples, Comparative Examples and Reference Examples under friction test conditions mentioned below. In the friction test, as shown in Fig. 1, a cylinder-shaped specimen (opposite member) 1 was in slidable contact with the disc-shaped specimen (sliding member) 2 of each of Examples, Comparative Examples and Reference Examples, and makes its reciprocating motion in directions indicated by a two-headed arrow, in which a sample oil (lubricant) shown in Table 1 was dropped to a sliding section between the opposite member 1 and the sliding member 2. The specification of the sample oil is shown in Table 2.

The opposite member 1 was formed of SUJ2 steel which was defined as a high carbon chromium bearing steel in JIS G 4805. The opposite member 1 was machined as described below and thereafter finished to have a surface roughness Ra of 0.04 µm.

### <Friction Test Condition>

Test apparatus: A cylinder-on-disc single member reciprocating friction tester
Specimen 1: A cylinder-shaped specimen having a diameter of 15 mm and a length of 22 mm
Specimen 2: A disc-shaped specimen having a diameter of 24 mm and a thickness of 7.9 mm
Load: 50N (pressing load of the specimen 1)
Amplitude of reciprocating motion: 3.0 mm
Frequency of reciprocating motion: 5 Hz
Test temperature: 80 °C
Measurement time: 30 minutes

**TABLE 1**

| | Composition of hydrophilic line particle-dispersed resinous material | | | | Lubricant (Sample oil) | Test result | |
|---|---|---|---|---|---|---|---|
| | Resin | Kind of fine particle | Average primary particle size | Added amount (wt%) | | Friction coefficient | Abrasion condition* |
| Example 1 | PAI | Diamond particle by detonation process | 4~5nm | 1 | 2 | 0.11 | A |
| Example 2 | PAI | ↑ | ↑ | 1 | 3 | 0.15 | A |
| Example 3 | PAI | ↑ | ↑ | 0.1 | 2 | 0.10 | A |
| Example 4 | PAI | ↑ | ↑ | 0.05 | 2 | 0.10 | A |
| Example 5 | PAI | ↑ | ↑ | 1 | 4 | 0.10 | A |
| Example 6 | PAI | Spheroidal silica | 34nm | 1 | 2 | 0.12 | A |
| Example 7 | PAI | Hydrophilic carbon black | Several 10nm | 1 | 2 | 0.13 | A |
| Example 8 | PA66 | Diamond particle by detonation process | 4-5nm | 1 | 2 | 0.18 | A |
| Compar. Example 1 | PAl | - | - | - | 2 | 0.19 | B |
| Compar. Example 2 | PAl | Diamond particle by detonation process | 4-5nm | 1 | 1 | 0.18 | A |
| Compar. Example 3 | PA66 | ↑ | ↑ | ↑ | 1 | 0.30 | B |
| Reference Example 1 | PAI | ↑ | ↑ | 10 | 2 | 0.12 | C |
| Reference Example 2 | pAI | Diamond particle by hlgh-temperature/ high-pressure process | 100nm | 1 | 2 | 0.16 | C (cylinder-shaped pecime on side of cylinder-shaped specimen) |

| | | | | | | | |
|---|---|---|---|---|---|---|---|
| *Abrasion condition A: Abrasion hardly observed on surface of resinous material B: Abrasion scratch observed on surface of resinous material C: Peeling (or lifting) of resinous material observed | | | | | | | |

**TABLE 2**

| Sample oil | | Sample oil 1 | Sample oil 2 | Sample oil 3 | Sample oil 4 |
|---|---|---|---|---|---|
| Base oil *1 | | Group III | Group III | Group III | Group III |
| Viscosity grade | | 0w-20 | 0w-20 | 0w-20 | 0w-20 |
| Friction modifier | Glycerol monooleate (%) | - | 1 | | 1 |
| | Oleyl amide (%) | - | | 1 | 1 |
| Other additives *2 | | 13 | 13 | 13 | 13 |

| | | | | | |
|---|---|---|---|---|---|
| *1: Classification of base oil is according to API1509-AppendixE set by American Petroleum Institute (API) *2: Other additives include a viscosity index improver, a metallic detergent, an anti-wear agent, an ashless dispersant and an antioxidant. | | | | | |

Results of the above friction test are shown in Table 1, in which the friction coefficient was an average friction coefficient of friction coefficients measured for 20 to 30 minutes during a testing time; and the abrasion condition was of the specimens 1, 2 and observed with the naked eye after completion of the friction test. Judgment standards for the abrasion condition are shown in Table 1.

As apparent from the test results shown in Table 1, regarding the preferable embodiments (Examples 1 to 8) of the low friction sliding mechanism according to the present invention in which the sliding members are used respectively with the lubricants, the low friction sliding mechanisms of Examples 1 to 7 are remarkably high in friction lowering effect as compared with those of Comparative Examples 1 and 2. Additionally, the low friction sliding mechanism of Example 8 is remarkably high in friction lowering effect as compared with that of Comparative Example 3.

From viewpoint of abrasion resistance, upon comparison of the low friction sliding mechanisms of Examples 1, 3 and 4 with that of Reference Example 1, it will be understood that the added amount of the hydrophilic fine particle is effective to be less than 10 %. Upon comparison of the low friction sliding mechanism of Example 1 and that of Reference Example 2, it will be understood that the average particle size of the hydrophilic fine particle is effective to be smaller than 100 nm.

As appreciated from the above, according to the present invention, at least a part of a sliding member is formed of a resinous material containing hydrophilic fine particle, and in slidable contact with an opposite sliding member upon existing of a lubricant including a friction modifier containing organic oxygen-containing compound and/or aliphatic amine-based compound, thereby extremely lowering the friction coefficient of the sliding member.

The entire contents of Japanese Patent Applications No. 2006-252043, filed September 19, 2006, and 2007-177100, filed July 5, 2007 are incorporated herein by reference.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. A low friction sliding mechanism comprising:
first and second sliding members which are in slidable contact with each other, at least one of the first and second sliding members having a sliding surface portion whose at least a part is formed of a resinous material containing hydrophilic fine particle; and
a lubricant existing between the first and second sliding members and including a friction modifier containing at least one of organic oxygen-containing compound and aliphatic amine-based compound.

2. A low friction sliding mechanism as claimed in Claim 1, wherein the hydrophilic fine particle is diamond particle.

3. A low friction sliding mechanism as claimed in Claim 1, wherein the hydrophilic fine particle is silica particle.

4. A low friction sliding mechanism as claimed in Claim 1, wherein the hydrophilic fine particle is hydrophilic carbon black which has undergone a hydrophilic treatment.

5. A low friction sliding mechanism as claimed in any of Claims 1 to 4, wherein the hydrophilic fine particle is selected from the group consisting of primary particle having an average particle size ranging from 1 to 100 nm, and aggregate of the primary particle.

6. A low friction sliding mechanism as claimed in any of Claims 1 to 5, wherein the hydrophilic fine particle is selected from the group consisting of primary particle having an average particle size ranging from 1 to 10 nm, and aggregate of the primary particle.

7. A low friction sliding mechanism as claimed in any of Claims 1 to 6, wherein the hydrophilic fine particle is contained in an amount ranging from more than 0 and less than 10 mass % based on the resinous material.

8. A low friction sliding mechanism as claimed in any of Claims 1 to 7, wherein the hydrophilic fine particle is contained in an amount ranging from more than 0 and not more than 1 mass % based on the resinous material.

9. A low friction sliding mechanism as claimed in any of Claims 1 to 8, wherein the hydrophilic fine particle is contained in an amount ranging from more than 0 and not more than 0.1 mass % based on the resinous material.

10. A low friction sliding mechanism as claimed in any of Claims 1 to 9, wherein the resinous material is a coating film and includes at least one resin selected from the group consisting of polyamide resin, polysulfone resin, polyetherimide resin, polyethersulfone resin, polyamideimide resin, polyimide resin, polyetherether ketone resin and epoxy resin.

11. A low friction sliding mechanism as claimed in Claim 10, wherein the coating film has a thickness ranging from 1 to 50 µm.

12. A low friction sliding mechanism as claimed in Claim 10 or 11, wherein the coating film has a thickness ranging from 1 to 20 µm.

13. A low friction sliding mechanism as claimed in any of Claims 1 to 12, wherein the friction modifier is contained in an amount ranging from 0.01 to 5.0 mass % based on the lubricant.

14. A low friction sliding mechanism as claimed in any of Claims 1 to 13, wherein the organic oxygen-containing compound contains at least one selected from the group consisting of at least one hydroxyl group and at least one carboxyl group.

15. A low friction sliding mechanism as claimed in any of Claims 1 to 14, wherein the organic oxygen-containing compound contains at least one selected from the group consisting of ester linkage and ether linkage.

16. A low friction sliding mechanism as claimed in any of Claim 1 to 15, wherein the organic oxygen-containing compound contains oleyl group.

17. A low friction sliding mechanism as claimed in any of Claims 1 to 16, wherein the resinous material is in the first sliding member, the resinous material is in slidable contact with a surface of the second sliding member.
